# EUROPEAN PATENT APPLICATION

(11) **EP 4 597 658 A1**
(43) Date of publication of application: **06.08.2025**
(21) Application number: 25150461.9
(22) Date of filing: 07.01.2025
(51) Int. Cl.: H01M 10/04, H01M 10/54

(54) **BATTERY CELL MATERIAL RECYCLING APPARATUS**

(30) Priority: 05.02.2024 CN 202420282140 U
(71) Applicant: Hithium Tech HK Limited, Hong Kong (HK)
(72) Inventor: Chen, Xuanfeng, Xiamen, 361100 (CN); Chen, Jiazhu, Xiamen, 361100 (CN); Zhou, Long, Xiamen, 361100 (CN); Fan, Yunlong, Xiamen, 361100 (CN)
(74) Representative: Habermann, Hruschka & Schnabel

(57) **Abstract**

Provided is a battery cell material recycling apparatus. The battery cell material recycling apparatus includes a first vacuum belt conveying mechanism and a second vacuum belt conveying mechanism. The first vacuum belt conveying mechanism has a first feed end and a first discharge end opposite to each other in a conveying direction of the first vacuum belt conveying mechanism. The second vacuum belt conveying mechanism has a second feed end and a second discharge end opposite to each other in a conveying direction of the second vacuum belt conveying mechanism. The second feed end is located above the first discharge end. A guide roller is disposed below the second discharge end. The guide roller is movable back and forth in the conveying direction of the second vacuum belt conveying mechanism. A battery cell material accommodated within the material receiving region in a zigzag stacked manner still does not experience excessive tension force. Thus, the problem of breakage can also be effectively avoided. Therefore, use of the battery cell material recycling apparatus in the present solution ensures the continuity of the battery cell material recycling process, improves an efficiency of the recycling operation, and eliminates a potential risk of breakage.

## Description

### FIELD

The present disclosure relates to the field of battery cell recycling technologies, and more particularly, to a battery cell material recycling apparatus.

### BACKGROUND

To reduce resource consumption and improve resource utilization, battery cell recycling is a sub-industry that has gradually emerged in a battery field in recent years. Battery cell recycling refers to the process of unwinding spent battery cells to separate the electrode plates and separators for reuse. Currently, battery cell recycling unwinding machines are mainly used to achieve winding and recycling of the electrode plates and the separators.

However, during recycling, the electrode plates and the separators need to be tensioned and transported via tension rollers before being rewound for recycling by an electrode plate winding mechanism and a separator winding mechanism, respectively. The electrode plates and the separators are prone to be broken due to being subjected to a large force, affecting continuity of recycling process. Although some battery cell recycling unwinding machines are equipped with automatic bonding and gluing mechanisms to repair the breakage, there still remains impact on an efficiency of recycling operation and a potential risk of breakage cannot be completely eliminated.

### SUMMARY

Base on this, it is necessary to provide a battery cell material recycling apparatus for solving a problem that breakage occurs during recycling, affecting continuity of recycling process and an efficiency of recycling operation.

A battery cell material recycling apparatus is provided according to the present disclosure. The battery cell material recovery device includes a first vacuum belt conveying mechanism and a second vacuum belt conveying mechanism. The first vacuum belt conveying mechanism has a first feed end and a first discharge end. The first feed end is opposite to the first discharge end in a conveying direction of the first vacuum belt conveying mechanism. The second vacuum belt conveying mechanism has a second feed end and a second discharge end. The second feed end is opposite to the second discharge end in a conveying direction of the second vacuum belt conveying mechanism. The second feed end is located above the first discharge end. A guide roller is disposed below the second discharge end. The guide roller is movable back and forth in the conveying direction of the second vacuum belt conveying mechanism.

The battery cell material recycling apparatus of the present solution is applied in an operation occasion of spent battery cell recycling. During operation, a battery cell material disassembled from a battery cell is conveyed to the first feed end of the first vacuum belt conveying mechanism, and then the first vacuum belt conveying mechanism adsorbs and fixes the battery cell material and conveys the battery cell material to the first discharge end. Since the first vacuum belt conveying mechanism conveys the battery cell material by means of vacuum adsorption, probable breakage of the battery cell material due to being subjected to excessive tension forces can be avoided. Further, since the second feed end of the second vacuum belt conveying mechanism is disposed above the first discharge end, the battery cell material reaching the first discharge end can be adsorbed and fixed by the second feed end, which allows the second feed end to adsorb and fix the battery cell material conveyed from the first vacuum belt conveying mechanism and further convey the battery cell material to the second discharge end. When the battery cell material falls from the second discharge end, the guide roller is operated to move back and forth in the conveying direction of the second vacuum belt conveying mechanism. In this way, the guide roller can guide the battery cell material to fall in a zigzag manner and be stacked and accommodated in a material receiving region, completing battery cell material recycling operation. Compared to a method of winding and recycling the battery cell material using a winding mechanism, the battery cell material accommodated within the material receiving region in a zigzag stacked manner still does not experience excessive tension force. Therefore, the problem of breakage can also be effectively avoided. Consequently, use of the battery cell material recycling apparatus in the present solution ensures the continuity of the battery cell material recycling process, improves an efficiency of the recycling operation, and eliminates a potential risk of breakage.

Technical solutions of the present disclosure may be further described below.

In one embodiment, the first discharge end is overlapped with the second feed end in a gravity direction of a battery cell material. The first feed end is arranged away from the second feed end. The second discharge end is arranged away from the first discharge end. Therefore, the second vacuum belt conveying mechanism can convey the battery cell material to the material receiving region subsequent to the first vacuum belt conveying mechanism.

In one embodiment, the first vacuum belt conveying mechanism is divided into a plurality of first vacuum zones in the conveying direction of the first vacuum belt conveying mechanism. One first vacuum zone, closest to the first discharge end, of the plurality of first vacuum zones is detached from vacuum in a process of conveying a battery cell material from the first discharge end to the second feed end.

In one embodiment, the guide roller is spaced apart from an adsorption surface of the second vacuum belt conveying mechanism to form a material passage through which a battery cell material is allowed to pass. When the guide roller moves back and forth in the conveying direction, the battery cell material can be driven to continuously fall into and stacked in a zigzag manner in a material storage chamber, completing the recycling of the battery cell materials.

In one embodiment, the battery cell material recycling apparatus further includes a power source. The power source is disposed at the second vacuum belt conveying mechanism and connected to the guide roller. The power source is configured to drive the guide roller to move back and forth in the conveying direction of the second vacuum belt conveying mechanism. Therefore, the power source can provide a driving force to enable the guide roller to automatically perform bidirectional back-and-forth movement, eliminating a need for manual operation by human labor.

In one embodiment, the battery cell material recycling apparatus further includes a guide rail. The guide rail is mounted at a side of the second vacuum belt conveying mechanism in a width direction of the second vacuum belt conveying mechanism. The guide roller includes a roller shaft and a connecting rod connected to an end of the roller shaft. The connecting rod is movably connected to the guide rail, and the connecting rod is connected to the power source. The guide rail provides guidance and limitation for the movement of the guide roller, ensuring smooth movement of the guide roller to ensure relative position accuracy of the battery cell material and a material inlet of the material container, preventing the battery cell material from falling outside the material container.

In one embodiment, the connecting rod is adjustable in height. The connecting rod is connected to each of two axial ends of the roller shaft. Two guide rails are provided and respectively mounted at two opposite sides of the second vacuum belt conveying mechanism in the width direction of the second vacuum belt conveying mechanism. The guide rails are movably connected to the connecting rods in a one-to-one correspondence. In this way, the smooth movement of the guide roller can be better ensured and thus precision of drop points for the battery cell material can be improved.

In one embodiment, the battery cell material recycling apparatus further includes the material container disposed in the material receiving region. The material container is configured to accommodate a battery cell material stacked in a zigzag manner. The material container has a material inlet at a top of the material container facing towards the second discharge end. The material container further has a material storage chamber in communication with the material inlet. The material inlet has a length greater than or equal to a length of the guide rail. In this way, the battery cell material can be prevented from smoothly falling into the material storage chamber to form a neat and zigzag stacked structure due to drop point errors.

In one embodiment, the second vacuum belt conveying mechanism is divided into a plurality of second vacuum zones in the conveying direction of the second vacuum belt conveying mechanism. In a process of transferring the battery cell material from the second vacuum belt conveying mechanism into the material container, second vacuum zones, aligned with the material inlet in a gravity direction of the battery cell material, of the plurality of second vacuum zones are detached from vacuum. In this way, the battery cell materials, which are adsorbed and fixed on the second vacuum belt conveying mechanism, can be orderly and partially detached from vacuum adsorption in sequence by means of movement of the guide roller, and then falls into the material storage chamber under an action of gravity, which prevents a situation where all the battery cell materials adsorbed on the second vacuum belt conveying mechanism are simultaneously detached from the vacuum and get hung up on the guide roller to fail to fall smoothly.

In one embodiment, the battery cell material recycling apparatus further includes a displacement conveyor line configured to drive the material container to move in a direction perpendicular to a conveying direction of the battery cell material. The material container is disposed at the displacement conveyor line. The material container has a plurality of material storage chambers arranged in parallel. Each of the plurality of material storage chambers is sequentially displaced to a material receiving region. In this way, continuous recycling of the battery cell materials can be realized and an operation ability of the battery cell material recycling apparatus can be improved.

### BRIEF DESCRIPTION OF THE DRAWINGS

Accompanying drawings, which form a part of the present disclosure, are intended to provide further understanding of the present disclosure. Schematic embodiments of the present disclosure and descriptions thereof are intended to explain the present disclosure, and do not form an undue limitation of the present disclosure.

To more clearly explain technical solutions according to the embodiments of the present disclosure, accompanying drawings required to be used in the description of the embodiments are briefly described below. Obviously, the accompanying drawings in the following descriptions are only some embodiments of the present disclosure. For those skilled in the art, other accompanying drawings can be obtained from these accompanying drawings without creative labor.
FIG. 1 is a schematic structural view of a battery cell material recycling apparatus according to some embodiments of the present disclosure.
FIG. 2 is a schematic structural view of the apparatus in FIG. 1, viewed from another perspective.
FIG. 3 is a left-side structural view of the battery cell material recycling apparatus in FIG. 1.
FIG. 4 is a right-side structural view of the apparatus in FIG. 3.

### Description of reference numerals of the accompanying drawings:

100 battery cell material recycling apparatus; 10 recycling mechanism; 11 material receiving region; 12 material container; 121 material inlet; 122 material storage chamber; 20 first vacuum belt conveying mechanism; 21 first feed end; 22 first discharge end; 30 second vacuum belt conveying mechanism; 31 second feed end; 32 second discharge end; 40 guide roller; 41 roller shaft; 42 connecting rod; 43 guide rail; 50 material passage; 60 displacement conveyor line; 200 battery cell material.

### DETAILED DESCRIPTION

To make purposes, characteristics, and advantages of the present disclosure more clear and understandable, specific embodiments of the present disclosure will be described in detail below with reference to the accompanying drawings. Numerous specific details are set forth in the following description to facilitate full understanding of the present disclosure. However, the present disclosure can be implemented in many other ways than those described herein, and similar modifications can be made by those skilled in the art without departing from spirits of the present disclosure, and thus the present disclosure is not limited by the specific embodiments disclosed below.

In the description of the present disclosure, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms such as "first", "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, unless otherwise specifically defined.

In the present disclosure, unless otherwise clearly stipulated and limited, terms such as "mount," "connect," "connect to," "fix," and the like should be understood in a broad sense. For example, it may mean a fixed connection or a detachable connection or connection as one piece; mechanical connection or electrical connection; direct connection or indirect connection through an intermediate; or internal communication of two components or the interaction relationship between two components, unless otherwise clearly limited. For those of ordinary skill in the art, specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

It should be noted that when an element is described as being "fixed to" or "arranged on" another element, it may be directly on the other element or an intermediate element may exist. When an element is interpreted as being "connected" to another element, it may be directly connected to the other element or an intermediate element may exist simultaneously. As used herein, the terms "vertical", "horizontal", "over", "below", "left", and "right" and similar expressions are used for illustrative purposes only and are not meant to be the only means of implementation.

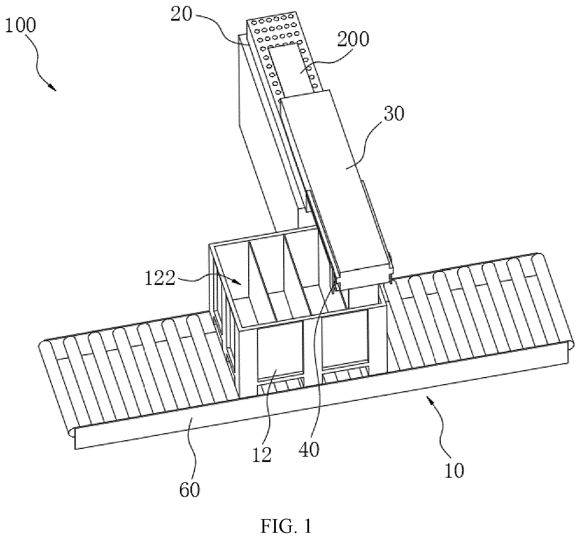

As illustrated in FIG. 1 to FIG. 4, a battery cell material recycling apparatus 100 according to an embodiment of the present disclosure is shown. The battery cell material recycling apparatus 100 is configured to recycle a battery cell material 200 disassembled from batteries. The battery cell material 200 includes, but is not limited to, electrode plates, separators, or the like.

Exemplarily, the battery cell material recycling apparatus 100 includes a recycling mechanism 10, a first vacuum belt conveying mechanism 20, and a second vacuum belt conveying mechanism 30. The recycling mechanism 10 is provided with a material receiving region 11. The first vacuum belt conveying mechanism 20 is disposed at a side of the recycling mechanism 10, and is configured to convey the battery cell material 200 to the material receiving region 11.

In the present disclosure, the first vacuum belt conveying mechanism 20 has a first feed end 21 and a first discharge end 22. The first feed end 21 is opposite to the first discharge end 22 in a conveying direction of the first vacuum belt conveying mechanism 20. The second vacuum belt conveying mechanism 30 has a second feed end 31 and a second discharge end 32. The second feed end 31 is opposite to the second discharge end 32 in a conveying direction of the second vacuum belt conveying mechanism 30. The second feed end 31 is located above the first discharge end 22. A guide roller 40 is disposed below the second discharge end 32. The guide roller 40 is movable back and forth in the conveying direction of the second vacuum belt conveying mechanism 30.

In summary, implementation of a technical solution in the embodiment of the present disclosure can provide the following advantageous effects. The battery cell material recycling apparatus 100 of the present solution is applied in an operation occasion of spent battery cell recycling. During operation, a battery cell material 200 disassembled from a battery cell is conveyed to the first feed end 21 of the first vacuum belt conveying mechanism 20, and then the first vacuum belt conveying mechanism 20 adsorbs and fixes the battery cell material 200 and conveys the battery cell material 200 to the first discharge end 22. Since the first vacuum belt conveying mechanism 20 conveys the battery cell material 200 by means of vacuum adsorption, probable breakage of the battery cell material 200 due to being subjected to excessive tension forces can be avoided. Further, since the second feed end 31 of the second vacuum belt conveying mechanism 30 is disposed above the first discharge end 22, the battery cell material 200 reaching the first discharge end 22 can be adsorbed and fixed by the second feed end 31, which allows the second feed end 31 to adsorb and fix the battery cell material 200 conveyed from the first vacuum belt conveying mechanism 20 and further convey the battery cell material 200 to the second discharge end 32. When the battery cell material 200 falls from the second discharge end 32, the guide roller 40 is operated to move back and forth in the conveying direction of the second vacuum belt conveying mechanism 30. In this way, the guide roller 40 can guide the battery cell material 200 to fall in a zigzag manner and be stacked and accommodated in the material receiving region 11, completing recycling operation of the battery cell material 200.

Compared to a method of winding and recycling the battery cell material 200 using a winding mechanism, the battery cell material 200 accommodated within the material receiving region 11 in a zigzag stacked manner still does not experience excessive tension force. Therefore, the problem of breakage can also be effectively avoided. Consequently, use of the battery cell material recycling apparatus 100 in the present solution ensures the continuity of the battery cell material 200 recycling process, improves the efficiency of the recycling operation, and eliminates a potential risk of breakage.

In the present disclosure, main body parts of the first vacuum belt conveying mechanism 20 and the second vacuum belt conveying mechanism 30 adopt the same structural design, to reduce a design and manufacturing cost and difficulty of later maintenance. For example, the main body part is composed of a motor, a support, a driving wheel, a driven wheel, and a vacuum conveyor belt. The vacuum conveyor belt has a vacuum chamber and an adsorption hole. The adsorption hole is uniformly distributed on an adsorption surface of the vacuum conveyor belt. It should be understood that, an adsorption surface of the first vacuum belt conveying mechanism 20 is disposed upwardly, and an adsorption surface of the second vacuum belt conveying mechanism 30 is disposed downwardly.

The vacuum chamber of the vacuum conveyor belt is in communication with a peripheral vacuum generator (such as an exhaust fan) directly or through a vacuum pipeline, generating a negative pressure at the adsorption hole to absorb and fix the battery cell material 200. When the vacuum conveyor belt rotates, the battery cell material 200 can be driven to be transferred.

On the basis of the above embodiments, the first discharge end 22 is overlapped with the second feed end 31 in a gravity direction of a battery cell material 200. The first feed end 21 is arranged away from the second feed end 31. The second discharge end 32 is arranged away from the first discharge end 22.

It should be understood that there is a predetermined gap between the first vacuum belt conveying mechanism 20 and the second vacuum belt conveying mechanism 30 in the gravity direction of the battery cell material 200. The gap has a width equal to or slightly greater than a thickness of the battery cell material 200. On this basis, the first vacuum belt conveying mechanism 20 is partially overlapped with the second vacuum belt conveying mechanism 30, that is, the adsorption surface of the first discharge end 22 overlaps with the adsorption surface of the second feed end 31 and the overlapped portions of the adsorption surface of the first discharge end 22 and the adsorption surface of the second feed end 31 are opposite to each other. Therefore, when the battery cell material 200 is conveyed by the first vacuum belt conveying mechanism 20 to the overlapped portion below the second vacuum belt conveying mechanism 30 (that is, between the first discharge end 22 and the second feed end 31), the battery cell material 200 can be adsorbed and fixed by the second vacuum belt conveying mechanism 30, allowing the second vacuum belt conveying mechanism 30 to continue conveying the battery cell materials 200 towards the material container 12 subsequent to the first vacuum belt conveying mechanism 20.

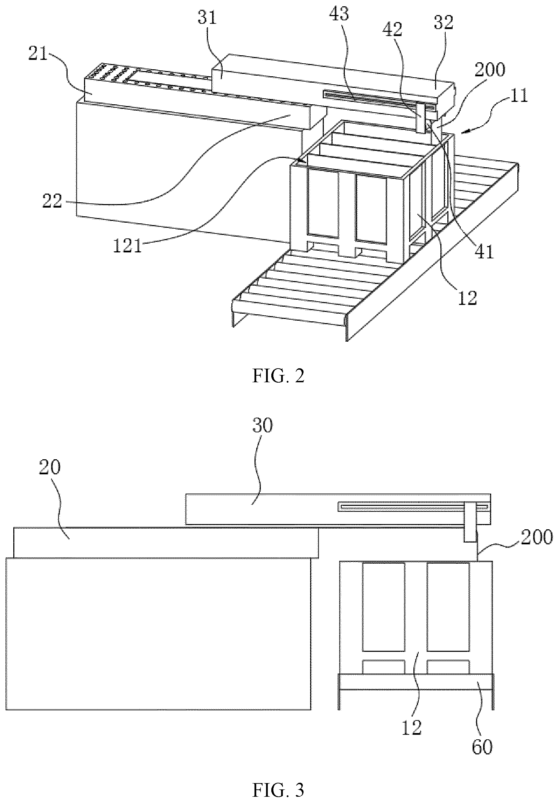

Further, as illustrated in FIG. 1 and FIG. 2, on the basis of any of the above embodiments, the first vacuum belt conveying mechanism 20 is divided into a plurality of first vacuum zones in the conveying direction of the first vacuum belt conveying mechanism 20. One first vacuum zone, closest to the first discharge end 22, of the plurality of first vacuum zones is detached from vacuum in a process of conveying a battery cell material 200 from the first discharge end 22 to the second feed end 31.

It should be understood that the first feed end 21 is configured to receive the battery cell material 200 obtained after battery disassembly from an external conveying mechanism. The battery cell material 200 is conveyed from the first feed end 21 to the first discharge end 22. The first discharge end 22 conveys the battery cell material 200 to the second feed end 31. After the battery cell material 200 reaches the overlapped portion between the first discharge end 22 and the second feed end 31, the first vacuum zone close to the first discharge end 22 is detached from the vacuum to release the battery cell material 200. In this way, the battery cell material 200 can be smoothly adsorbed and obtained by the second feed end 31. The remaining first vacuum zones maintain adsorption and conveying for the battery cell material 200, to continuously convey the battery cell material 200 to the second feed end 31. Also, the battery cell material transitioned to the second vacuum belt conveying mechanism 30 is continuously conveyed from the second feed end 31 to the second discharge end 32, meeting a need of continuous conveying and transition of the battery cell material 200 with a large length between the first vacuum belt conveying mechanism 20 and the second vacuum belt conveying mechanism 30.

It is necessary to explain that the first vacuum belt conveying mechanism 20 is divided into the plurality of first vacuum zones in the conveying direction of the first vacuum belt conveying mechanism 20. In particular, a vacuum chamber in a vacuum conveyor belt of the first vacuum belt conveying mechanism 20 is divided into a plurality of sub-chambers isolated from each other. Each of the plurality of sub-chambers is in communication with a plurality of adsorption holes and a vacuum pipeline. When vacuum generation through a particular vacuum pipeline is stopped, a sub-chamber corresponding to the vacuum pipeline may lose a negative pressure environment, and thus cause the adsorption hole to lose negative pressure suction, achieving an effect of detaching from the vacuum.

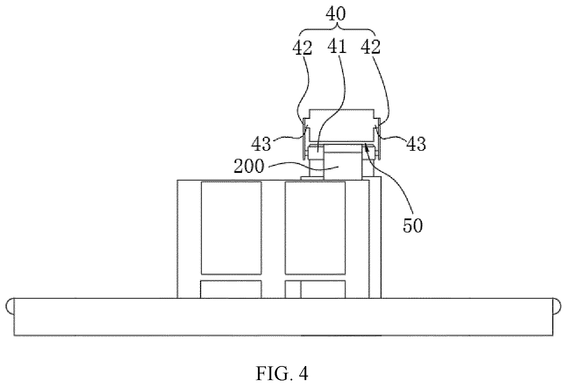

Further, as illustrated in FIG. 2 and FIG. 4, in still other embodiments, the guide roller 40 is spaced apart from an adsorption surface of the second vacuum belt conveying mechanism 30 to form a material passage 50 through which the battery cell material 200 is allowed to pass.

Further, the recycling mechanism 10 further includes the material container 12 disposed in the material receiving region 11. The material container 12 is configured to accommodate the battery cell material 200 stacked in a zigzag manner. The material container 12 has a material inlet 121 at a top of the material container 12 facing towards the second discharge end 32. The material container 12 further has a material storage chamber 122 in communication with the material inlet 121. The material inlet 121 has a length greater than or equal to a length of the guide rail 43.

The battery cell material 200 passes through the material passage 50 by driving of the second vacuum belt conveying mechanism 30, and then a head end of the battery cell material 200 (that is, an end portion of the battery cell material 200 first moving to the battery cell material recycling apparatus 100) falls downwardly by itself under the action of gravity, to enable the battery cell material 200 to be wound around the guide roller 40. In addition, in an initial state, the guide roller 40 is stopped at an end farthest from the first vacuum belt conveying mechanism 20 (that is, at the second discharge end 32). Moreover, the guide roller 40 is in this case located above an edge of the material inlet 121 farthest from the first vacuum belt conveying mechanism 20. In this way, when the guide roller 40 moves towards the second feed end 31, and when the second vacuum belt conveying mechanism 30 is detached from the vacuum, the battery cell material 200 can fall into the material storage chamber 122 through the material inlet 121 under an action of a weight of battery cell material 200. When a length of the battery cell material 200 that has fallen into the material storage chamber 122 is equal to the length of the material storage chamber 122, the guide roller 40 moves back to the initial position towards the second discharge end 32. In this case, the guide roller 40 pushes the battery cell material 200 to bend and move in a zigzag manner, allowing the formed battery cell material 200 with the same length to continue falling into the material storage chamber 122 and stack on top of the previously deposited battery cell material segment. This process repeats, with the battery cell material 200 continuously falling into and stacking in the material storage chamber 122 in a zigzag manner (i.e., in S-shaped), completing the recycling of the battery cell material 200.

In another exemplary embodiment of the present disclosure, the guide roller 40 can be movable back and forth in both directions by manual operation.

However, to further improve automation of the battery cell material recycling apparatus 100 and improve the recycling efficiency of the battery cell material 200, in some embodiments, the battery cell material recycling apparatus 100 further includes a power source (not illustrated). The power source is disposed at the second vacuum belt conveying mechanism 30 and connected to the guide roller 40. The power source is configured to drive the guide roller 40 to move back and forth in the conveying direction of the second vacuum belt conveying mechanism 30. Therefore, the power source can provide a driving force to enable the guide roller to automatically perform bidirectional back-and-forth movement, eliminating a need for manual operation by human labor.

For example, the power source may be any one of drive devices such as cylinders, electric push rods, etc., which can directly output a linear reciprocating power. Alternatively, the power source may be a drive device capable of converting a rotational power into the linear reciprocating power, and may be flexibly selected as desired.

Further, as illustrated in FIG. 2 and FIG. 4, the battery cell material recycling apparatus 100 further includes a guide rail 43. The guide rail 43 is mounted at a side of the second vacuum belt conveying mechanism 30 in a width direction of the second vacuum belt conveying mechanism 30. The guide roller 40 includes a roller shaft 41 and a connecting rod 42 connected to an end of the roller shaft 41. The connecting rod 42 is movably connected to the guide rail 43. In addition, the connecting rod 42 is connected to the power source.

With the guide rail 43 movably connected to the connecting rod 42, the guide rail 43 provides guidance and limitation for movement of the guide roller 40, ensuring smooth movement of the guide roller 40, and thus ensuring relative position accuracy of the battery cell material 200 and the material inlet 121 of the material container 12, which prevents the battery cell material 200 from falling outside the material container 12. Alternatively, a regular and zigzag stacked structure cannot be formed in the material storage chamber 122 due to drop point errors of the battery cell material 200, affecting subsequent use.

Furthermore, the connecting rod 42 is connected to each of two axial ends of the roller shaft 41. Two guide rails 43 are provided and respectively mounted at two opposite sides of the second vacuum belt conveying mechanism 30 in the width direction of the second vacuum belt conveying mechanism 30. The guide rails 43 are movably connected to the connecting rods 42 in a one-to-one correspondence. In this way, the smooth movement of the guide roller 40 can be better ensured, and drop point accuracy of the battery cell material 200 can be improved.

Moreover, in the present disclosure, the connecting rod 42 is designed to be adjustable in height, which allows the connecting rod 42 to lower the roller shaft 41 to an appropriate height during the initial stage in which the battery cell material 200 falls into the material container 12. Therefore, the roller shaft 41 can better guide and push the battery cell material 200 to form a zigzag stacked structure to be accommodated in the material storage chamber 122.

For example, the connecting rod may adopt any one of a telescopic rod mechanism, a motor-driven screw and nut mechanism, a scissor lift mechanism, or the like, which may be selected according to actual needs.

In addition, on the basis of any of the above embodiments, the second vacuum belt conveying mechanism 30 is divided into a plurality of second vacuum zones in the conveying direction of the second vacuum belt conveying mechanism 30. In a process of transferring the battery cell material 200 from the second vacuum belt conveying mechanism 30 into the material container 12, second vacuum zones, aligned with the material inlet 121 in a gravity direction of the battery cell material 200, of the plurality of second vacuum zones are detached from vacuum.

In an exemplary embodiment of the present disclosure, some of the second vacuum zones of the second vacuum belt conveying mechanism 30 overlaps with the first vacuum belt conveying mechanism 20 in the gravity direction of the battery cell material 200, and always maintains an adsorption operation state during operation, in such a manner that the battery cell material 200 can be continuously conveyed from the first vacuum belt conveying mechanism 20 to the second vacuum belt conveying mechanism 30 and the battery cell material 200 can be conveyed from the second feed end 31 to the second discharge end 32 (that is, the battery cell material 200 can be guaranteed to be continuously moved above the material inlet 121 of the material container 12). Also, the rest of the second vacuum zones vertically aligned with the material inlet 121 is detached from the vacuum, enabling the portion of the battery cell material 200 moved above the material inlet 121 to fall in a zigzag stacked manner by driving of the guide roller 40 and finally be accommodated in the material storage chamber 122.

According to this design, the battery cell material 200 adsorbed and fixed on the second vacuum belt conveying mechanism 30 can be orderly and partially detached from vacuum adsorption in sequence by means of movement of the guide roller 40, and then falls into the material storage chamber under an action of gravity, which prevents a situation where all the battery cell materials 200 adsorbed on the second vacuum belt conveying mechanism 30 are simultaneously detached from the vacuum and get hung up on the guide roller 40 to fail to fall smoothly.

In addition, on the basis of any of the above embodiments, the recycling mechanism 10 further includes a displacement conveyor line 60. The material container 12 is disposed at the displacement conveyor line 60. The displacement conveyor line 60 is configured to drive the material container 12 to move in a direction perpendicular to a conveying direction of the battery cell material 200. The material container 12 has a plurality of material storage chambers 122 arranged in parallel. Each of the plurality of material storage chambers 122 is sequentially displaced to a material receiving region 11.

When the first material storage chamber 122 is filled with the battery cell material 200, the displacement conveyor line 60 drives the material container 12 to move by a width distance of the material storage chamber 122, enabling the second material storage chamber 122 to move below the second discharge end 32 of the second vacuum belt conveying mechanism 30 to realize continuous recycling of the battery cell material 200, and improve an operation capacity of the battery cell material recycling apparatus 100. When all the material storage chambers 122 in the material container 12 are filled with the battery cell material 200, the displacement conveyor line 60 conveys the battery cell material 200 away to allow a forklift to remove the battery cell material 200 and facilitate secondary use of the recycled battery cell material 200.

In another exemplary embodiment of the present disclosure, the displacement conveyor line 60 may be any one of a pulley mechanism, a sprocket mechanism, or the like, which may be flexibly selected as desired. The present disclosure is not limited in this regard.

Technical features in the above embodiments can be combined arbitrarily. For the sake of concise description, not all possible combinations of the technical features in the above embodiments are described. However, as long as there is no conflict between the technical features, any combination of technical features in the above embodiments should be considered as falling within the scope of the present disclosure.

While several embodiments of the present disclosure have been described above in a specific and detailed manner, the protection scope of the present disclosure cannot be construed as being limited to these embodiments. It should be noted that, those skilled in the art can make various variants and improvements without departing from the concept of the present disclosure, and these variants and improvements shall fall within the protection scope of the present disclosure. The protection scope of the present disclosure shall be defined by the appended claims.

## Claims

1. A battery cell material recycling apparatus, comprising:
a first vacuum belt conveying mechanism having a first feed end and a first discharge end, the first feed end being opposite to the first discharge end in a conveying direction of the first vacuum belt conveying mechanism; and
a second vacuum belt conveying mechanism having a second feed end and a second discharge end, the second feed end being opposite to the second discharge end in a conveying direction of the second vacuum belt conveying mechanism, wherein:
the second feed end is located above the first discharge end; and
a guide roller is disposed below the second discharge end, the guide roller being movable back and forth in the conveying direction of the second vacuum belt conveying mechanism.

2. The battery cell material recycling apparatus according to claim 1, wherein:
the first discharge end is overlapped with the second feed end in a gravity direction of a battery cell material;
the first feed end is arranged away from the second feed end; and
the second discharge end is arranged away from the first discharge end.

3. The battery cell material recycling apparatus according to claim 1, wherein the first vacuum belt conveying mechanism is divided into a plurality of first vacuum zones in the conveying direction of the first vacuum belt conveying mechanism, one first vacuum zone, closest to the first discharge end, of the plurality of first vacuum zones being detached from vacuum in a process of conveying a battery cell material from the first discharge end to the second feed end.

4. The battery cell material recycling apparatus according to claim 1, wherein the guide roller is spaced apart from an adsorption surface of the second vacuum belt conveying mechanism to form a material passage through which a battery cell material is allowed to pass.

5. The battery cell material recycling apparatus according to claim 1, further comprising a power source, the power source being disposed at the second vacuum belt conveying mechanism and connected to the guide roller, and the power source being configured to drive the guide roller to move back and forth in the conveying direction of the second vacuum belt conveying mechanism.

6. The battery cell material recycling apparatus according to claim 5, further comprising a guide rail mounted at a side of the second vacuum belt conveying mechanism in a width direction of the second vacuum belt conveying mechanism, wherein:
the guide roller comprises a roller shaft and a connecting rod connected to an end of the roller shaft, the connecting rod being movably connected to the guide rail, and the connecting rod being connected to the power source.

7. The battery cell material recycling apparatus according to claim 6, wherein:
the connecting rod is adjustable in height;
the connecting rod is connected to each of two axial ends of the roller shaft; and
two guide rails are provided and respectively mounted at two opposite sides of the second vacuum belt conveying mechanism in the width direction of the second vacuum belt conveying mechanism, the guide rails being movably connected to the connecting rods in a one-to-one correspondence.

8. The battery cell material recycling apparatus according to claim 6 or 7, wherein a material container is disposed below the second discharge end and configured to accommodate a battery cell material stacked in a zigzag manner, the material container having a material inlet at a top of the material container facing towards the second discharge end, the material container further having a material storage chamber in communication with the material inlet, and the material inlet having a length greater than or equal to a length of the guide rail.

9. The battery cell material recycling apparatus according to claim 8, wherein:
the second vacuum belt conveying mechanism is divided into a plurality of second vacuum zones in the conveying direction of the second vacuum belt conveying mechanism; and
in a process of transferring the battery cell material from the second vacuum belt conveying mechanism into the material container, second vacuum zones, aligned with the material inlet in a gravity direction of the battery cell material, of the plurality of second vacuum zones are detached from vacuum.

10. The battery cell material recycling apparatus according to claim 8, further comprising a displacement conveyor line configured to drive the material container to move in a direction perpendicular to a conveying direction of the battery cell material, the material container being disposed at the displacement conveyor line, wherein the material container has a plurality of material storage chambers arranged in parallel, each of the plurality of material storage chambers being sequentially displaced to a material receiving region.
